# EUROPÄISCHE PATENTSCHRIFT

(11) **EP 1 310 148 B1**
(45) Veröffentlichungstag und Bekanntmachung des Hinweises auf die Patenterteilung: **03.09.2008**
(21) Anmeldenummer: 02024246.7
(22) Anmeldetag: 31.10.2002
(51) Int. Cl.: A01D 33/08

(54) **Erntemaschine**
Harvester
Récolteuse

(30) Priorität: 07.11.2001 DE 10154225; 09.11.2001 DE 10154758
(43) Veröffentlichungstag der Anmeldung: 14.05.2003
(73) Patentinhaber: Holmer Maschinenbau GmbH, 84069 Eggmühl (DE)
(72) Erfinder: Holmer, Alfons, 84069 Eggmühl (DE)
(74) Vertreter: Graf, Helmut

(56) Entgegenhaltungen:
- WO-A-99/61871
- DE-A- 4 216 427
- GB-A- 2 215 972
- US-A- 3 870 627
- US-A- 5 338 257
- US-A- 5 735 740

## Beschreibung

Die Erfindung bezieht sich auf ein Erntefahrzeug bzw. auf eine Erntemaschine gemäß Oberbegriff Patentanspruch 1 und dabei speziell, aber nicht ausschließlich auf einen Mehrrei hen-Kartoffel-Vollernter.

Eine Erntemaschine zum Ernten bzw. Roden von Wurzelfrüchten, insbesondere Kartoffeln mit den Merkmalen des Oberbegriffs des Patentanspruchs 1 ist bekannt (WO 99/61871). Die bekannte Maschine ist als selbstfahrende Erntemaschine ausgebildet und zwar mit einem Rodeaggregat an der Vorderseite des Maschinenrahmens und mit einem Bunker auf dem Maschinen- bzw. Fahrzeugrahmen. Das gerodete Erntegut wird auf einer Förderstrecke vom Rodeaggregat in den Bunker gefördert. Die Transportstrecke umfasst u.a. drei Trenn- und Reinigungsbereiche, die insbesondere auch zum Entfernen von Erdreich aus dem Erntegut dienen und in Transportrichtung des Erntegutstromes aneinander anschließen.

Bekannt ist weiterhin einestationäre Vorrichtung zum Reinigung von Feldfrüchten, bei der mehrere in vertikaler Richtung gegeneinander versetzte Abscheideeinrichtungen kaskadenartig aneinander anschließen, von denen in eine erste Abscheideeinrichtung aus einem ganze Feldfrüchte, Bruchstücke der Feldfrüchte und Bodenmaterial enthaltenden Aufgabegutgemisch die ganzen Feldfrüchte abgetrennt und mit einem Transportband abgeführt werden, in einer zweiten Abscheideeinrichtung die Bruchstücke der Feldfrüchte aus dem Gemisch ausgesondert und an einen Transporteur weitergeleitet werden, und in einer dritten Abscheideeinrichtung die noch verwertbaren kleineren Bruchstücke des Erntegutes vom Bodenmaterial getrennt werden.

Speziell beim Ernten von Kartoffeln besteht das Problem, daß einerseits ein Trennen und Reinigen des Ernteguts von Kraut und Fremdstoffen, andererseits aber auch eine besonders schonende Behandlung des Ernteguts erforderlich ist, um beispielsweise Beschädigungen und/oder Druckstellen am Erntegut zu vermeiden.

Aufgabe der Erfindung ist es, ein Erntemaschine aufzuzeigen, die eine optimale und dennoch schonende Trennung von Erntegut, Kraut und Fremdstoffen ermöglicht. Zur Lösung dieser Aufgabe ist ein Erntemaschine entsprechend dem Patentanspruch 1 oder 3 ausgebildet.

Weiterbildungen der Erfindung sind Gegenstand der Unteransprüche. Die Erfindung wird im Folgenden im Zusammenhang mit den Figuren an Ausführungsbeispielen näher erläutert. Es zeigen:

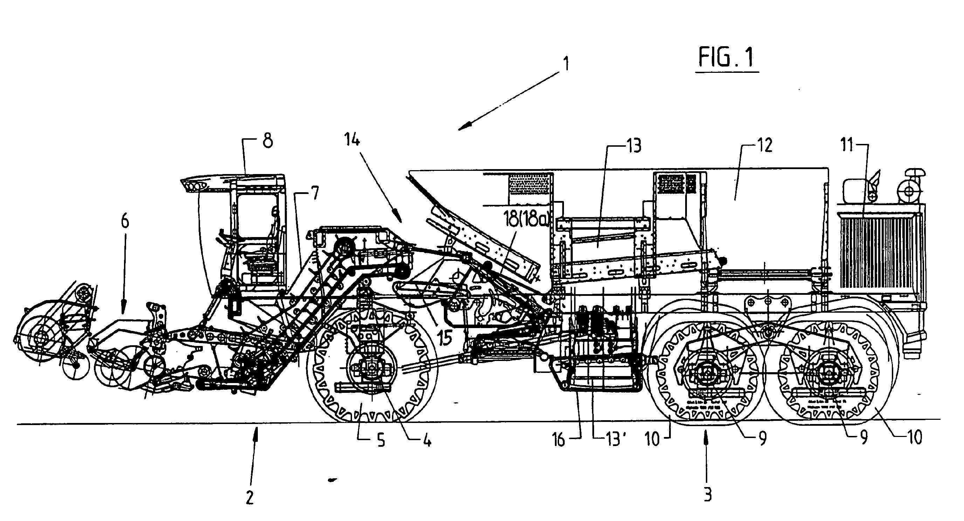

- Fig. 1: in Seitenansicht eine selbstfahrende Erntemaschine zum Ernten von Kartoffeln;
- Fig. 2: in schematischer Darstellung das Trenn- und Reinigungsaggregat der Maschine der Figur 1 sowie dessen Funktionsweise, in einem ersten Arbeitsmodus für eine normale Trennung und Reinigung;
- Fig. 3: in einer Darstellung ähnlich Figur 2 das Trenn- oder Reinigungsaggregat in einem zweiten Arbeitsmodus für eine besonders schonende Trennung und Reinigung;
- Fig. 4: in schematischer Darstellung eine Draufsicht auf das Trenn- oder Reinigungsaggregat der Figuren 2 und 3 in dem Arbeitsmodus der Figur 2, wobei in dieser Figur oberhalb einer dortigen vertikalen Fahrzeugmittelebene FM die oberen Elemente oder Bereiche des Trenn- und Reinigungsaggregates zusammen mit einem anschließenden Igelband und unterhalb der Fahrzeugmittelebene FM die unteren Elemente oder Bereiche des Trenn- und Reinigungsaggregates wiederum mit dem anschließenden Igelband dargestellt sind;
- Fig. 5: eine weitere mögliche Ausführungsform des Trenn- und Reinigungsaggregates in dem ersten Arbeitsmodus für die übliche Trennung und Reinigung;

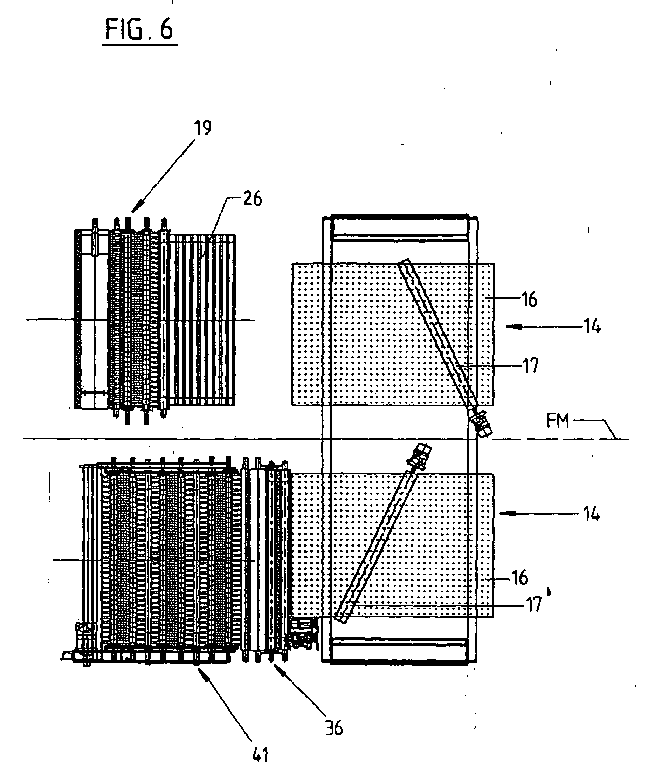

- Fig. 6: eine Draufsicht auf das Trenn- und Reinigungsaggregat der Figur 5, wobei in dieser Figur wiederum oberhalb der Fahrzeugmittelebene FM die oberen Elemente oder Bereiche des Trenn- und Reinigungsaggregates zusammen mit einem anschließenden Igelband und unterhalb der Fahrzeugmittelebene FM die unteren Elemente oder Bereiche des Trenn- und Reinigungsaggregates wiederum mit dem anschließenden Igelband dargestellt sind;

Die in den Figuren allgemein mit 1 bezeichnete selbstfahrende Erntemaschine dient zum Ernten bzw. Roden von Kartoffeln. Sie besteht in an sich bekannter Weise aus einem zweiteiligen Rahmen mit einem Vorderrahmen 2 und einem rückwärtigen Rahmen 3, die gelenkig miteinander verbunden sind und von denen der Vorderrahmen 2 bei der dargestellten Ausführungsform u.a. eine angetriebene, lenkbare Achse 4 mit zugehörigen Rädern 5, das eigentliche Rodeaggregat 6, den in Richtung des Erntegutstromes an das Rodeaggregat anschließenden Aufwärtsförderer 7 sowie das Fahrerhaus 8 aufweist, von dem aus die Lenkung der Erntemaschine 1 sowie Steuerung sämtlicher Funktionen und Funktionselemente dieser Maschine erfolgen.

Der rückwärtige Rahmen 3 weist bei der dargestellten Ausführungsform u.a. zwei ebenfalls angetriebene und lenkbare Achsen 9 mit zugehörigen Rädern 10, einen heckseitig angeordneten Antriebsmotor 11, einen Bunker 12 für das Erntegut (Kartoffeln), einen Aufwärtsförderer bzw. Elevator 13 zum Einbringen des Ernteguts in den Bunker 12 sowie zwei parallele Förderstrecken 14 auf, die beidseitig von der vertikalen Fahrzeugmittelebene FM angeordnet sind, die (Mittelebene) auch die Längsachse des rückwärtigen Rahmens 3 einschließt. Der rückwärtige Rahmen 3 weist weiterhin eine Nivelliereinrichtung auf, mit der der Rahmen gegenüber den Achsen 8 so ausgerichtet wird, daß auch bei abschüssigem Gelände die Fahrzeugmittelebene FM stets die Vertikale oder annähernd vertikale Ebene ist.

Jede Förderstrecke 14 schließt mit einem als Siebförderer ausgebildeten, endlos umlaufend angetriebenen Stab-Förderband 15 an den Aufwärtsförderer 6 an und endet jeweils mit einem Igelband 16, d.h. mit einem umlaufend angetriebenen Transportband mit zapfenartigen Vorsprüngen, von welchem das Erntegut dann mittels einer umlaufend angetriebenen Walze 17 auf eine horizontale Länge des Transportbandes 13' des Aufwärtsförderers 13 gefördert wird. Anstelle von getrennten Förderbändern 15 kann auch für beide Förderstrecken 14 ein gemeinsames Förderband 15 vorgesehen sein.

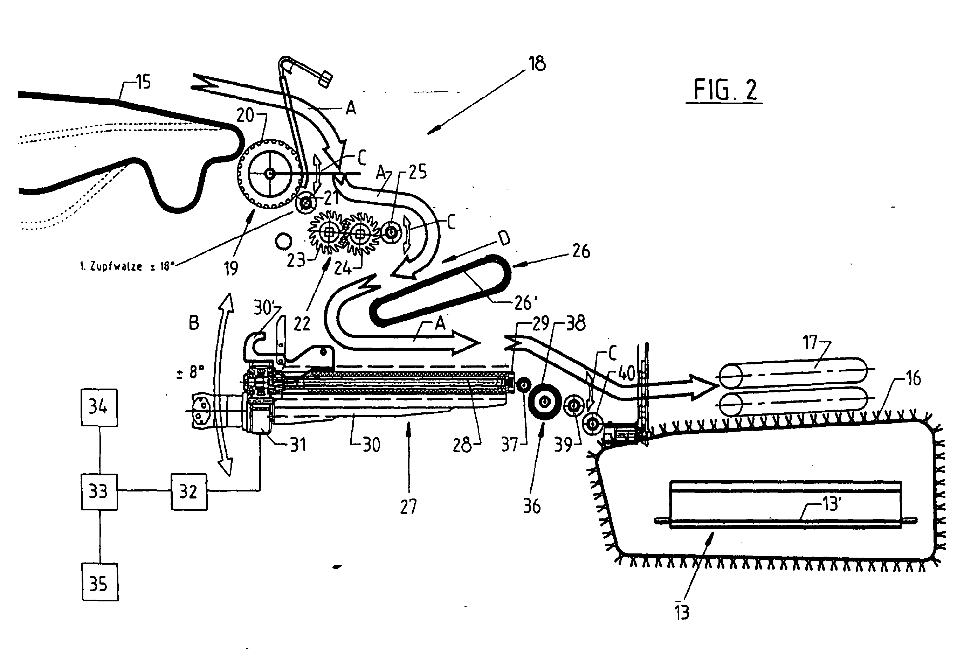

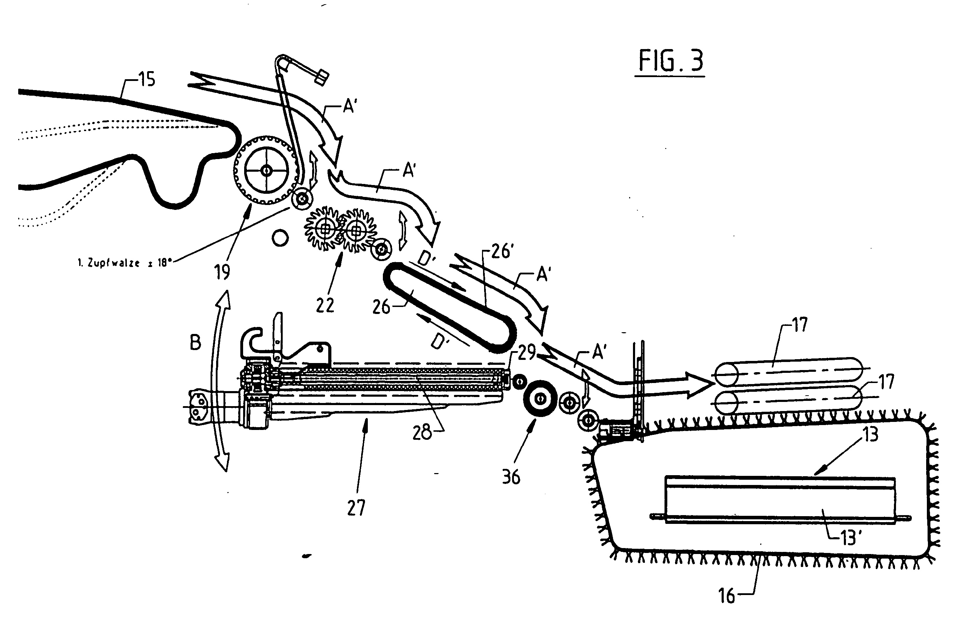

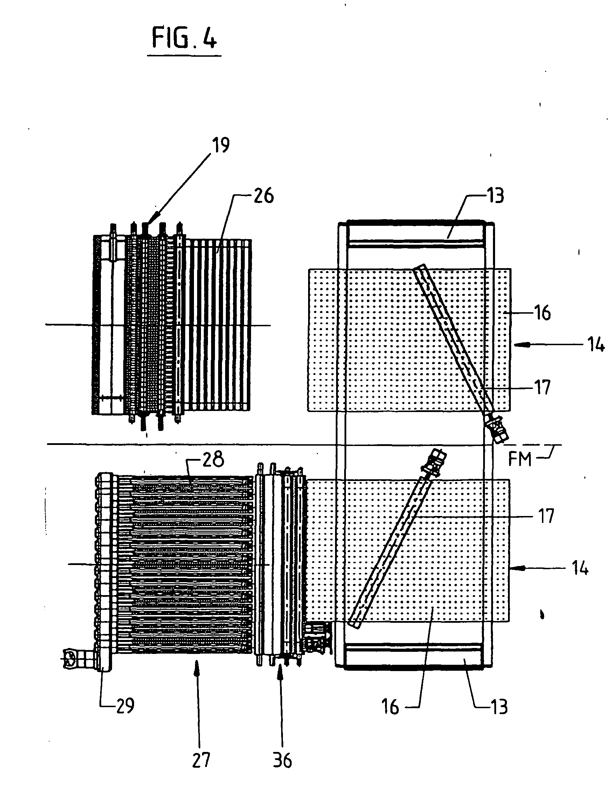

In jeder Förderstrecke 14 ist zwischen dem Förderband 15 und dem Igelband 16 ein Trenn- und Reinigungsaggregat vorgesehen, welches in den Figuren 2 - 4 generell mit 18 bezeichnet ist und zwischen zwei unterschiedlichen Betriebszuständen umschaltbar ist, und zwar zwischen dem in der Figur 2 dargestellten Betriebszustand ("erster" Arbeitsmodus) der üblichen Reinigung und Trennung des Ernteguts und dem in der Figur 3 dargestellten Betriebszustand ("zweiter" Arbeitsmodus) einer schonenden, weniger intensiven Reinigung.

Das Trenn- und Reinigungsaggregat dient zum weiteren Trennen des Ernteguts (Kartoffeln) von unerwünschten Fremdstoffen, d.h. zum Abtrennen von Kraut, Aussondern von Fremdkörpern und Fremdstoffen, wie Erde, Sand, Steinen usw., und zwar bei äußerst schonender Behandlung des Ernteguts. Das Trenn- und Reinigungsorgan 18 umfaßt hierfür folgende Funktionselemente, die in der in der Figur 2 mit dem dortigen Pfeil A angegebenen Förderrichtung des Erntegutstromes aneinander anschließen:

Ein erstes Zupfwalzensystem 19 bestehend aus der an das Transportband 15 anschließenden Walze 20, die in Förderrichtung des Erntegutstromes umlaufend angetrieben ist, d.h. bei der für die Figur 2 gewählten Darstellung im Uhrzeigersinn und die mit einer gegenläufig angetriebenen Zupfwalze 21 derart zusammenwirkt, daß in einem zwischen den beiden Walzen 20 und 21 gebildeten Spalt am Erntegut haftendes Kraut hineingezogen und dadurch vom Erntegut entfernt wird.

Auf das Zupfwalzensystem 19 folgt in Förderrichtung A eine Sternwalzengruppe 22 mit zwei Sternwalzen 23 und 24, die jeweils in Walzenlängsrichtung gegeneinander versetzt mehrere ringförmige Gruppen von sternartig von der Walze wegstehenden Fingern aufweisen, wobei diese Ringgruppen an der Walze 24 gegenüber den Ringgruppen an der Walze 23 derart versetzt sind, daß die Ringgruppen der Walze 24 in die Zwischenräume zwischen den Ringgruppen der Walze 23 eingreifen. Der Sternwalzengruppe 22 ist weiterhin eine Aufbereitungswalze 25 zugeordnet, die in Förderrichtung A den Abschluß der Sternwalzenanordnung bildet. Die Sternwalzen 23 und 24 sind in Förderrichtung angetrieben. Die Aufbereichtungswalze ist entgegengesetzt angetrieben, so daß in dem Betriebszustand der Figur 2 eine Aufbereitung in der Weise erfolgt, daß mit dem Erntegut mitgeführte Fremdstoffe über den zwischen der Aufbereitungswalze 25 und der Sternwalze 24 gebildete Spalt zumindest vorübergehend von dem Erntegut getrennt werden und so eine Aufgliederung des Ernteguts erfolgt. Beim Arbeitsmodus der Figur 3 werden Fremdstoffe über den zwischen der Aufbereitungswalze 25 und der Sternwalze 24 gebildete Spalt vollständig aus dem Erntegut ausgeschieden.

Die Walzen 20, 21, 23, 24 und 25 sind jeweils mit ihren Achsen in horizontaler Richtung senkrecht zu der Fahrzeugmittelebene FM orientiert.

An die Sternwalzengruppe 22 schließt sich ein Förderband 26 an, welches auch als "Überfahrband" bezeichnet werden kann und ebenso wie das Förderband 15 als Stab-Förderband bestehend aus einer Vielzahl von Stäben ausgeführt ist, die wenigstens an ihren Enden über zwei jeweils eine in sich geschlossene Schlaufe bildende Bandelemente oder Riemen miteinander verbunden sind. Das Förderband 26 ist in seiner Förderrichtung umschaltbar und auch in seiner Neigung und Lage veränderbar, um das Trenn- und Reinigungsaggregat 18 von dem Betriebszustand der Figur 2 in den Betriebszustand der Figur 3 umzuschalten.

In dem Betriebszustand der Figur 2 befindet sich das Förderband 26 mit seiner oberen, die Förderebene bildenden Länge 26' unterhalb der Sternwalzengruppe 22 derart, daß das Erntegut von der Sternwalzengruppe 22 auf die obere Länge 26' des Förderbandes 26 und von diesem auf einen Längswalzenreiniger 27 gelangt, der von einer Vielzahl von Walzen 28 gebildet ist, die in einem Lagerrahmen 29 um ihre Achsen drehbar gelagert sind, die parallel zur vertikalen Fahrzeugmittelebene FM liegen und mit der Horizontalen einen Winkel einschließt, der entsprechend dem Doppelpfeil B der Figur 2 einstellbar ist, und zwar beispielsweise in einem Bereich zwischen +/-10°, so daß die Neigung der von der Oberseite der Walzen 28 gebildete Transportebebene gegenüber der Horizontalen in diesem Winkelbereich veränderbar ist.

Die Walzen 28 sind um ihre Längsachse umlaufend angetrieben und liegen mit ihren Achsen in einer gemeinsamen Ebene, die zur Oberseite hin zumindest an den Randbereichen konkav ausgebildet ist, und zwar beispielsweise dadurch, daß die äußeren Walzen 28 etwas höher angeordnet sind als die zwischen diesen äußeren Walzen liegenden weiteren Walzen 28, und die die Fahrzeugmittelebene FM senkrecht schneidet. Weiterhin sind die Walzen 28 an ihren Umfang mit einer wendeloder förderschneckenartigen Struktur versehen, so daß die umlaufenden Walzen 28 auf das Erntegut in Richtung des Pfeiles A fördernd wirken. Durch die Einstellung des Neigungswinkels (Doppelpfeil B) können die Verweildauer des Ernteguts und damit die Einwirkungszeit des Längswalzenreinigers 27 auf das Erntegut eingestellt werden. Fremdpartikel, beispielsweise Sand, Erde, kleinere Steine sowie Kraut werden durch die zwischen den einzelnen Walzen 28 gebildeten Spalte nach unten gefördert und so aus dem Erntegutstrom entfernt.

Die Walzen 28 sind so angetrieben, daß einander benachbarte Walzen 28 jeweils gegensinnig umlaufen. Für die Einstellung des Neigungswinkels ist der zur Lagerung der Walzen 28 dienende Rahmen 29 an einem Tragrahmen 30 um eine Achse senkrecht zur Fahrzeugmittelebene FM, d.h. senkrecht zur Zeichenebene der Figur 2 und 3 schwenkbar, und zwar im Bereich des in der Figur 2 rechten Endes der Walzen 28. Mit dem Tragrahmen 30 ist der Längswalzenreiniger 27 als komplettes, voll funktionsfähiges Aggregat austauschbar am rückwärtigen Rahmen 3 der Maschine 1 befestigt. Die Einstellung des Neigungswinkels (Doppelpfeil B) erfolgt durch einen hydraulischen Stellantrieb 31, der ebenfalls Bestandteil des Längswalzenreinigers 27 ist und der über eine Steuerventileinrichtung 37 von einer Steuerelektronik 33 angesteuert wird, die den Stellantrieb 31 auch so nachriegelt, daß die gewählte Neigung des Längswalzenreinigers 27 auch bei abfallenden Gelände beibehalten wird, d.h. die Neigung des Längswalzenreinigers 27 wird in Abhängigkeit von der Neigung des Geländes nachregelt. Hierfür sind der Steuerelektronik 33 entsprechende Sensoren 34 zugeordnet, die die Neigung des rückwärtigen Rahmens 3 um die Achse senkrecht zur Fahrzeugmittelebene FM erfassen. Grundsätzlich besteht die Möglichkeit, die Steuerelektronik 33 als Bestandteil eines geschlossenen Regelkreises auszubilden, wobei dann wenigstens ein Neigungssensor 34 an dem Rahmen 29 des Längswalzenreinigers 27 vorgesehen ist und ein Istsignal liefert, welches durch Vergleich mit dem bei 35 eingestellten Sollwert die Nachregelung der Neigung des Längswalzenreinigers 27 bewirkt.

An den Längswalzenreiniger 27 schließt sich in Förderrichtung A eine zweite Zupfwalzengruppe 36 an, die in Transportrichtung A aufeinander folgend eine Transport- oder Übergangswalze 37, eine Transportwalze 38, eine mit der Transportwalze 38 zusammenwirkende Zupfwalze 39 sowie eine Transportwalze 40 aufweist, welch letztere den Übergang zu dem anschließenden Igelband 16 bildet.

Die Walzen 37 - 40 sind wiederum mit ihren Achsen in horizontaler Richtung senkrecht zur Fahrzeugmittelebene FM orientiert und um diese Achsen umlaufend angetrieben, und zwar die Transportwalzen 37, 38 und 40 derart, daß die Drehrichtung an dem jeweils oben liegenden Umfangsbereich dieser Walzen der Förderrichtung A entspricht. Die Zupfwalze 39 ist entgegengesetzt, d.h. bei der Darstellung der Figur 2 im Gegenuhrzeigersinn angetrieben, so daß Krautbestandteile, insbesondere auch am Erntegut noch haftendes Kraut in den zwischen der Transportwalze 38 und der Zupfwalze 39 gebildeten Spalt hineingezogen und damit vom Erntegut entfernt wird.

Zur Einstellung der Wirkung der Zupfwalzengruppen 19 und 36 sind die Zupfwalzen 21 und 39 radial zu ihrer Walzenachse und tangential oder in etwa tangential zu der zugehörigen Transportwalze 20 bzw. 38 einstellbar, so daß der zwischen der jeweiligen Zupfwalze 21 bzw. 39 und der zugehörigen Transportwalze 20 bzw. 38 gebildete Zupfspalt mehr oder weniger wirksam wird. Bei der dargestellten Ausführungsform sind die Zupfwalzen 21 und 39 jeweils auf einem Kreisbogen um die Achse der zugehörigen Transportwalze 20 bzw. 38 schwenkbar, d.h. die Zupfwalzen 21 und 39 sind hierfür zusammen mit ihren Antrieb an einem Lagerrahmen oder Lagerträger vorgesehen, der um die Achse der zugehörigen Transportwalze 20 bzw. 38 um einen vorgegebenen Winkelbetrag schwenkbar ist, wie dies in der Figur 2 mit dem Doppelpfeil C angedeutet ist.

Wie die Figur 2 weiterhin zeigt, verläuft innerhalb des Trenn- und Reinigungsaggregates 18 der Transportweg des Erntegutes von dem höheren Niveau des Transportbandes 15 auf das niedrigere Niveau des Igelbandes 16, wobei die Transportstrecke im Bereich der ersten Zupfwalzengruppe 19, im Bereich des Förderbandes 26 und im Bereich der zweiten Zupfwalzengruppe 36 jeweils schräg nach unten und im Bereich der Sternwalzengruppe 22 horizontal oder nur leicht schräg nach unten verläuft und im Bereich des Längswalzenreinigers 27 in Abhängigkeit der Winkeleinstellung einen horizontalen oder in Förderrichtung abfallenden oder ansteigenden Verlauf aufweist.

Wie die Figur 2 weiterhin zeigt, wird in dem dortigen Betriebszustand des Trenn- und Reinigungsaggregates 18 durch das Förderband 26 eine Umlenkung des Erntegutstromes nach der Sternwalzengruppe 22 erreicht, der dann nach dem Auftreffen auf den darunter angeordneten Längswalzenreiniger 27 eine erneute Umlenkung erfährt, so daß sich für den Erntegutstrom bei der Darstellung der Figur 2 ein S-förmiger und serpentinenartiger Verlauf zwischen der ersten Zupfwalzengruppe 19 und der zweiten Zupfwalzengruppe 36 ergibt. Das Förderband 26 ist hierfür in Richtung des Pfeiles D umlaufend angetrieben und so angeordnet, daß die obere Länge 26' des Förderbandes 26, die (obere Länge) die Transportfläche bildet mit der Oberseite des Längswalzenreinigers 27 einen spitzen Winkel einschließt, der sich zur zweiten Zupfwalzengruppe 36 hin öffnet.

Die Figur 3 zeigt das Trenn- und Reinigungsaggregat 18 in einem Betriebszustand, der eine weniger intensive Trennung und Reinigung und damit eine besonders schonende Behandlung des Erntegutes ermöglicht, und zwar dann, wenn der Anteil an Fremdstoffen im Erntegutstrom, d.h. insbesondere auch der Anteil von Erde und Lehm am Erntegut geringer ist.

Bei dem in der Figur 3 dargestellten Arbeitsmodus ist das Förderband 26 so geschwenkt und entsprechend dem Pfeil D' in umgekehrter Richtung derart angetrieben, daß die obere Länge 26' des Förderbandes 26 ausgehend von der Sternwalzengruppe 22 schräg nach unten geneigt ist und der Erntegutstrom von der Sternwalzengruppe 22 über das Förderband 26direkt an die zweite Zupfwalzengruppe 36 gelangt, und zwar unter Umgehung des Längswalzenreinigers 27, wie dies in der Figur 3 mit den Pfeilen A' angedeutet ist.

Ebenso wie die Zupfwalzen 21 und 39 ist auch die Aufbereichtungswalze 25 in Bezug auf die Benachbarte Sternwalze 24 durch Schwenken um die Achse dieser Sternwalze einstellbar (Doppelpfeil C).

Sämtliche Walzen des Trenn- und Reinigungsaggregates 18 sowie auch das Förderband 26 sind an ihren mit dem Erntegut in Berührung kommenden Flächen oder Teilen aus einem gummielastischen Material gefertigt. Auf dem Igelband 16 erfolgt eine weitere Reinigung des Erntegutes von anhaftenden Fremdstoffen.

Das Trenn- und Reinigungsaggregat 18 hat u.a. folgende Vorteile:
- Bei geringem Platzbedarf, insbesondere auch bei reduzierter Baugröße bzw. -länge in Längsrichtung des Rahmens 3 ist eine intensive Trennung und Reinigung möglich, und zwar insbesondere auch unter Verwendung von zwei Zupfwalzengruppen 19 und 36;
- durch die Verwendung von zwei Zupfwalzengruppen ist eine schonende Behandlung des Erntegutes in jeder Zupfwalzengruppe möglich;
- für eine intensivere Reinigung und Trennung wird in dem ersten Arbeitsmodus der Längswalzenreiniger 27 verwendet;
- sofern es die Umstände zulassen, ist eine Reinigung und Trennung in einem zweiten Arbeitsmodus ohne Verwendung des Längswalzenreinigers 27 möglich, und zwar durch einfache Änderung der Position und der Antriebsrichtung des Förderbandes 26;
- die Verweildauer des Erntegutstromes auf dem Längswalzenreiniger 27 ist durch Änderung der Neigung dieses Reinigers einstellbar. Sämtliche Einstellungen können vom Fahrerhaus 8 vorgenommen werden.

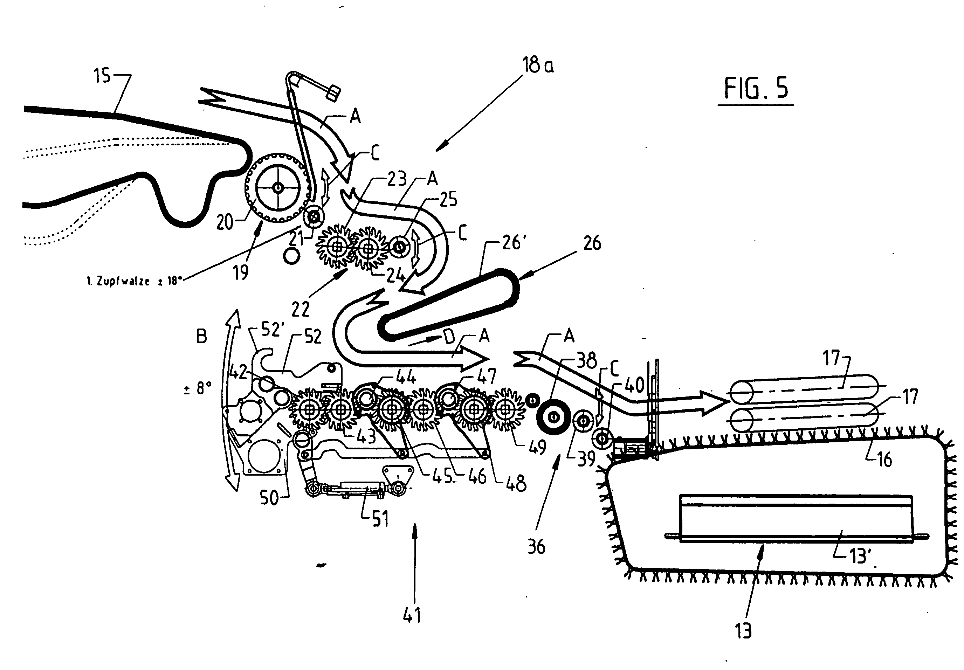

Die Figur 5 zeigt in einer Darstellung wie Figur 2 einen Trenn- und Reinigungsaggregat 18a, welches sich von dem Aggregat 18 lediglich dadurch unterscheidet, daß anstelle des Längswalzenreinigers 27 ein Sternwalzenreiniger vorgesehen ist, der in seiner Förderrichtung A aneinander anschließend im wesentlichen folgende Elemente aufweist:
- Ein erstes Sternwalzenpaar bildende Sternwalzen 42 und 43,
- eine Trennwalze 44,
- ein zweites Sternwalzenpaar bildende Sternwalzen 45 und 46,
- eine Trennwalze 47 und ein drittes Sternwalzenpaar bildende Sternwalzen 48 und 49.

Die vorgenannten Walzen sind in einem nicht dargestellten Rahmen gelagert und durch einen ebenfalls nicht dargestellten Antrieb um ihre horizontalen, senkrecht zur Fahrzeugmittelebene FM orientierten Achsen angetrieben und schließen derart aneinander an, daß sie mit ihren oben liegenden Bereichen eine Transportfläche für das Erntegut bilden. Die Trennwalzen 44 und 47, die gegenläufig zu einer benachbarten Sternwalze 43 bzw. 46 angetrieben sind, sind in ihrer Höhenlage durch ein hydraulisches Stellglied 51 einstellbar, und zwar durch Schwenken um die Achse der benachbarten Sternwalze 45 bzw. 48, so daß in Abhängigkeit von der Stellung der jeweiligen Trennwalze 44 bzw. 47 die Breite des zwischen dieser Trennwalze und der benachbarten, entgegengesetzt angetriebenen Sternwalze 43 bzw. 46 gebildeten Spalts für eine optimale Ausscheidung der im Erntegut vorhandenen Fremdstoffe (auch größere Steine) möglich ist.

Die Einstellung über das Stellglied 51, welches bei der dargestellten Ausführungsform als doppelt wirkender Hydraulik-Zylinder ausgeführt ist, erfolgt wiederum vom Fahrerhaus 8.

Der Sternwalzenreiniger 41 besitzt weiterhin einen Tragrahmen 52, in welchem der Lagerrahmen 50 um eine Achse senkrecht zur Fahrzeugmittelebene FM, beispielsweise um die Achse der Sternwalze 49 schwenkbar vorgesehen ist, so daß die Neigung der von dem Sternwalzenreiniger gebildeten Teil der Förderstrecke gegenüber der Horizontalen entsprechend dem Pfeil B einstellbar ist, und zwar durch ein dem Stellglied 31 entsprechendes, nicht dargestelltes Stellglied. Mit der Einstellung der Neigung (Doppelpfeil B) wird wiederum die Verweildauer des Erntegutstromes auf dem Sternwalzenreiniger eingestellt.

Ebenso wie der Längswalzenreiniger27 mit dem Tragrahmen 30 ist auch der Sternwalzenreiniger mit seinem Tragrahmen 52 auswechselbar am rückwärtigen Rahmen 3 der Maschine 1 vorgesehen. Für diese auswechselbaren Befestigung ist vorzugsweise ein Schnellwechsel- oder Befestigungssystem vorgesehen, welches aus einem mit einem Haltebolzen zusammenwirkenden hakenförmigen Kupplungsabschnitt 30' bzw. 52' am jeweiligen Tragrahmen und einem nicht dargestellten Sicherungsbolzen besteht.

Während der Längswalzenreiniger 27 bevorzugt dort verwendet wird, wo hauptsächlich feinkörnigere Fremdstoffe anfallen, wird der Sternwalzenreiniger 41 bevorzugt dort verwendet, wo im Erntegutstrom auch größere, feste Fremdkörper, insbesondere Steine vorhanden sind. Durch das Schnellwechselsystem ist ein Austauschen des Längswalzenreinigers 27 gegen den Sternwalzenreiniger 41 und umgekehrt ohne großen Zeitaufwand möglich.

Auch bei der Ausführung der Figur 5 kann durch entsprechende Änderung der Position sowie der Förderrichtung des Förderbandes 26 das Trenn- und Reinigungsaggregat 18a in den zweiten Arbeitsmodus umgeschaltet werden, in dem dann der Erntegutstrom nicht mehr über den Sternwalzenreiniger 41 geführt ist.

Die Erfindung wurde voranstehend an Ausführungsbeispielen beschrieben. Es versteht sich, daß zahlreiche Änderungen möglich sind, ohne daß dadurch der der Erfindung zugrundeliegende Erfindungsgedanke verlassen wird.

### Bezugszeichenliste

- 1: Erntemaschine (Mehrreihen-Kartoffel-Vollernter)
- 2: Vorderrahmen
- 3: rückwärtiger Rahmen
- 4: Achse
- 5: Rad
- 6: Rodeaggregat
- 7: Aufwärtsförderer
- 8: Fahrerhaus
- 9: Achse
- 10: Rad
- 11: Antriebsmotor
- 12: Bunker
- 13: Aufwärtsförderer (Elevator)
- 13': Transportband des Elevators
- 14: Förderstrecke
- 15: Förderband
- 16: Igelband
- 17: umlaufende Walze
- 18, 18a: Trenn- und Reinigungsaggregat
- 19: erste Zupfwalzengruppe
- 20: Förder- oder Transportwalze
- 21: Zupfwalze
- 22: Sternwalzengruppe
- 23, 24: Sternwalze
- 25: Aufbereitungswalze
- 26: Förderband
- 26': Obere Länge
- 27: Längswalzenreiniger

- 28: Walze
- 29: Lagerrahmen
- 30: Trägerrahmen
- 30': Kupplungsabschnitt
- 31: Stellglied
- 32: Ventilanordnung
- 33: Steuerelektronik
- 34: Sensor
- 35: Eingabe
- 36: zweite Zupfwalzengruppe
- 37, 38: Transportwalze
- 39: Zupfwalze
- 40: Transportwalze
- 41: Sternwalzenreiniger
- 42, 43: Sternwalze
- 44: Trennwalze
- 45, 46: Sternwalze
- 47: Trennwalze
- 48, 49: Sternwalze
- 50: Lagerrahmen
- 51: Stellglied (doppelwirkender Hydraulikzylinder)
- 52: Tragrahmen
- 52': Kupplungsabschnitt

- A, A': Förderrichtung des Erntegutstroms
- B: Verstellung des Neigungswinkels des Längswalzenreinigers 27 bzw. des Sternwalzenreinigers 41

- C: Verstellung der Zupfwalzen 21, 39 bzw. der Aufbereitungswalze 25

- D, D': Umlaufrichtung des Förderbandes 26
- FM: Fahrzeugmittelebene

## Patentansprüche

1. Erntemaschine zum Ernten bzw. Roden von Wurzelfrüchten, insbesondere Kartoffeln, mit einem Rodeaggregat (5), mit einem Bunker (12) zur Aufnahme des Ernteguts und mit wenigstens einer zwischen dem Rodeaggregat und dem Bunker (12) gebildete Förderstrecke für das Erntegut, wobei in der Förderstrecke wenigstens ein Trenn- und/oder Reinigungsaggregat (18, 18a) zum Entfernen von am Erntegut vorhandenem Kraut sowie zum Ausscheiden von mit dem Erntegut geförderten Fremdstoffen vorgesehen ist, wobei das Trenn- und/oder Reinigungsaggregat (18, 18a) in Transportrichtung (A, A') des Erntegutstromes wenigstens drei Trenn- und/oder Reinigungsbereiche (22, 2*7*, 41, 36) bildet,
**dadurch gekennzeichnet,**
**dass** wenigstens zwei Trenn- und/oder Reinigungsbereiche (22, 27) in in vertikaler Richtung gegeneinander versetzten Ebenen angeordnet sind, und daß eine Fördereinrichtung (26) vorgesehen ist, welche den Erntegutstrom von einem oberen Trenn- und/oder Reinigungsbereich (22) auf einen darunterliegenden Trenn- und/oder Reinigungsbereich (27) leitet.

2. Erntemaschine nach Anspruch 1, **dadurch gekennzeichnet, daß** das Trenn- und/oder Reinigungsaggregat (18, 18a) wenigstens einen Längswalzenreiniger (27) und/oder einen Sternwalzenreiniger (41) aufweist, und daß eine auf diesen Längswalzenreiniger (27) und/oder Sternwalzenreiniger (41) für den Erntegutstrom gebildete Transportebene zumindest in einem Teilbereich in ihrer Neigung durch einen von einer Steuerelektronik (33) mit wenigstens einem Neigungssensor (34) gesteuerten Stellantrieb (31) derart einstellbar ist, daß eine eingestellte und/oder gewählte Neigung der Transportebene unabhängig von der Neigung der Maschine beibehalten wird.

3. Erntemaschine nach Anspruch 1 oder 2, **dadurch gekennzeichnet, daß** die Transporteinrichtung (26) derart steuerbar ist, daß sie in einem ersten Zustand des Trenn- und/oder Reinigungsaggregats (18, 18a) den Erntegutstrom von einem ersten Trenn- und/oder Reinigungsbereich (19, 22) auf einen zweiten Trenn- und/oder Reinigungsbereich (27, 41) leitet und in einem zweiten Zustand des Trenn- und/oder Reinigungsaggregats (18, 18a) den Erntegutstrom direkt von dem ersten Trenn- und/oder Reinigungsbereich (19, 22) an einen auf den zweiten Trenn- und/oder Reinigungsbereich (27, 41) in Transportrichtung des Erntegutstroms folgenden dritten Trenn- und/oder Reinigungsbereich (36) leitet.

4. Erntemaschine nach einem der vorhergehenden Ansprüche, **dadurch gekennzeichnet, daß** der Erntegutstrom innerhalb des Trenn- und/oder Reingungsaggregates (18, 18a) zumindest in dem ersten Betriebszustand dieses Aggregates auf einer Transportstrecke bewegt wird; die wenigstens eine zweimalige Umlenkung aufweist bzw. einen S- oder Z-förmigen Verlauf aufweist,
wobei beispielsweise
ein erster Trenn- und/oder Reinigungsbereich (19, 22) oberhalb eines zweiten, in Transportrichtung des Erntegutstromes folgenden Trenn- und/oder Reinigungsbereichs (27, 41) vorgesehen ist, und/oder
wobei beispielsweise
der Erntegutstrom auf einer von dem ersten Trenn- und/oder Reinigungsbereich (19, 22), von der Fördereinrichtung (26) und von dem zweiten Trenn- und/oder Reinigungsbereich (27, 41) gebildeten Teil der Transportstrecke die wenigstens zweimalige Umlenkung erfährt bzw. den S- oder Z-förmigen Verlauf aufweist.

5. Erntemaschine nach einem der vorhergehenden Ansprüche, **dadurch gekennzeichnet, daß** die Fördereinrichtung von wenigstens einem Förderband (26) gebildet ist, und daß für die Änderung des Betriebszustandes des Trenn- und/oder Reinigungsaggregats (18, 18a) die Förderrichtung (D, D') und/oder die Position des Förderbandes (26) veränderbar sind.

6. Erntemaschine nach einem der vorhergehenden Ansprüche, **dadurch gekennzeichnet, daß** wenigstens ein Trenn- und/oder Reinigungsbereich wenigstens eine Zupfwalze (21, 39) oder Zupfwalzengruppe (19, 36) aufweist,
wobei beispielsweise
der erste und/oder dritte Trenn- und/oder Reinigungsbereich wenigstens eine Zupfwalze (21, 39) oder Zupfwalzengruppe (19, 36) aufweist.

7. Erntemaschine nach einem der vorhergehenden Ansprüche, **dadurch gekennzeichnet, daß** der erste Trenn- und/oder Reinigungsbereich wenigstens eine Sternwalzengruppe (22) mit Aufbereitungswalze (25) aufweist.

8. Erntemaschine nach einem der vorhergehenden Ansprüche, **dadurch gekennzeichnet, daß** wenigstens ein Trenn- und/oder Reinigungsbereich von wenigstens einem Längswalzenreiniger (27) und/oder von einem Sternwalzenreiniger (41) gebildet ist,
wobei beispielsweise
der zweite Trenn- und/oder Reinigungsbereich von dem wenigstens einen Längswalzenreiniger (27) und/oder Sternwalzenreiniger (41) gebildet ist, und/oder
wobei beispielsweise
der Längswalzenreiniger (27) von einer Vielzahl von einander benachbarten Walzen (28) gebildet ist, und daß diese eine gemeinsame Transportebene für den Erntegutstrom bilden, welche bevorzugt zumindest im Randbereich zur Oberseite hin konkav ausgeführt ist.

9. Erntemaschine nach einem der vorhergehenden Ansprüche, **dadurch gekennzeichnet, daß** in Transportrichtung (A, A') des Erntegutstromes auf den ersten Trenn- und/oder Reinigungsbereich (19, 22) folgend und dem dritten Trenn- und/oder Reinigungsbereich (36, 39) in der Transportrichtung vorausgehend der zweite Trenn- und/oder Reinigungsbereich vorgesehen ist, welcher von wenigstens einem Längswalzenreiniger (27) und/oder Sternwalzenreiniger (41) gebildet ist.

10. Erntemaschine nach einem der vorhergehenden Ansprüche, **dadurch gekennzeichnet, daß** die wenigstens eine Förderstrecke (14) auf das Trenn- und/oder Reinigungsaggregat (18, 18a) in Förderrichtung (A, A') des Erntegutstromes folgend wenigstens ein Igelband (16) aufweist, wobei beispielsweise
die Förderstrecke auf das lgelband (16) folgend einen Elevator (13) zum Einbringen des Ernteguts in den Bunker (12) aufweist.

## Claims

1. Harvester for harvesting or lifting root crops, more particularly potatoes, with a lifting assembly (5), with a hopper (12) for receiving the harvested crops and with at least one conveyor stretch formed between the lifting assembly and the hopper (12) for the harvested crops, wherein at least one separating and/or cleaning assembly (18, 18a) is provided in the conveyor stretch for removing haulm present on the harvested crops as well as for separating out foreign bodies conveyed with the harvested crops, wherein the separating and/or cleaning assembly (18, 18a) forms at least three separating and/or cleaning zones (22, 27, 41, 36) in the conveyor direction (A, A') of the flow of harvested crops, **characterised in that** at least two separating and/or cleaning zones (22, 27) are arranged in planes vertically off-set from one another, and that a conveyor device (26) is provided which directs the flow of harvested crops from an upper separating and/or cleaning zone (22) to a separating and/or cleaning zone (27) located underneath same.

2. Harvester according to claim 1, **characterised in that** the separating and/or cleaning assembly (18, 18a) has at least one longitudinal cleaning roller (27) and/or one star cleaning roller (41) and that a transport plane formed for the flow of harvested crops on this longitudinal cleaning roller (27) and/or star cleaning roller (41) can be adjusted in its incline at least in one part of the zone by a control drive (31) controlled by control electronics (33) having at least one incline sensor (34) so that a set and/or selected incline of the transport plane is retained independently of the incline of the harvester machine.

3. Harvester according to claim 1 or 2 **characterised in that** the conveyor device (26) can be controlled so that in a first position of the separating and/or cleaning assembly (18, 18a) it directs the flow of harvested crops from a first separating and/or cleaning zone (19, 22) onto a second separating and/or cleaning zone (27, 41) and in a second position of the separating and/or cleaning assembly (18, 18a) it directs the flow of harvested crops directly from the first separating and/or cleaning zone (19, 22) to a third separating and/or cleaning zone (36) which follows the second separating and/or cleaning zone (27, 41) in the conveyor direction of the flow of harvested crops.

4. Harvester according to one of the preceding claims **characterised in that** the flow of harvested crops is moved inside the separating and/or cleaning assembly (18, 18a) at least in the first operating state of this assembly on a conveyor stretch which has at least a double deflection or has an S- or Z-shaped path, wherein by way of example a first separating and/or cleaning zone (19, 22) is provided above a second separating and/or cleaning zone (27, 41) following in the conveyor direction of the flow of harvested crops, and/or wherein by way of example the flow of harvested crops on a part of the conveyor stretch formed by the first separating and/or cleaning zone (19, 22) , by the conveyor device (26) and by the second separating and/or cleaning zone (27, 41) undergoes the at least double deflection or has the S- or Z-shaped path.

5. Harvester according to one of the preceding claims **characterised in that** the conveyor device is formed by at least one conveyor belt (26), and that the conveyor direction (D, D') and/or the position of the conveyor belt (26) can be changed to alter the operating state of the separating and/or cleaning assembly (18, 18a).

6. Harvester according to one of the preceding claims **characterised in that** at least one separating and/or cleaning zone has at least one plucking roller (21, 39) or plucking roller group (19, 36) wherein by way of example the first and/or third separating and/or cleaning zone has at least one plucking roller (21, 39) or plucking roller group (19, 36).

7. Harvester according to one of the preceding claims **characterised in that** the first separating and/or cleaning zone has at least one star roller group (22) with processing roller (25).

8. Harvester according to one of the preceding claims **characterised in that** at least one separating and/or cleaning zone is formed by at least one longitudinal cleaning roller (27) and/or by one star cleaning roller (41) wherein by way of example the second separating and/or cleaning zone is formed by at least one longitudinal cleaning roller (27) and/or one star cleaning roller (41) and/or wherein by way of example the longitudinal cleaning roller (27) is formed by a number of adjoining rollers (28) , and that these form a common conveyor plane for the flow of harvested crops which (plane) is preferably designed concave to the top side at least in the edge areas.

9. Harvester according to one of the preceding claims **characterised in that** the second separating and/or cleaning zone which is formed by at least one longitudinal cleaning roller (27) and/or star cleaning roller (41) is provided following the first separating and/or cleaning zone (19, 22) in the conveyor direction (A, A') of the flow of harvested crops and preceding the third separating and/or cleaning zone (36, 39) in the conveyor direction.

10. Harvester according to one of the preceding claims, **characterised in that** the at least one conveyor stretch (14) following the separating and/or cleaning assembly (18, 18a) in the conveyor direction (A, A') of the flow of harvested crops has at least one hedgehog belt (16) wherein by way of example the conveyor stretch has following the hedgehog belt (16) an elevator (13) for bringing the harvested crops into the hopper (12).

## Revendications

1. Récolteuse destinée à récolter ou à arracher des légumes racines, en particulier des pommes de terre, comprenant un ensemble d'arrachage (5), une trémie (12) pour recevoir le produit récolté et au moins un tronçon de transport formé entre l'ensemble d'arrachage et la trémie (12) et destiné au produit récolté, dans laquelle il est prévu sur le tronçon de transport au moins un ensemble de séparation et / ou de nettoyage (18, 18a) pour enlever l'herbe présente sur le produit récolté ainsi que pour séparer les matières étrangères transportées avec le produit récolté, dans laquelle l'ensemble de séparation et / ou de nettoyage (18, 18a) forme dans le sens de transport (A, A') du courant de produit récolté au moins trois zones de séparation et / ou de nettoyage (22, 27, 41, 36), **caractérisée en ce qu'**au moins deux zones de séparation et / ou de nettoyage (22, 27) sont disposées dans des plans décalés l'un par rapport à l'autre dans le sens vertical, et **en ce qu'**il est prévu un dispositif de convoyage (26) qui guide le courant de produit récolté d'une zone de séparation et / ou de nettoyage supérieure (22) vers une zone de séparation et / ou de nettoyage (27) sous-jacente.

2. Récolteuse selon la revendication 1, **caractérisée en ce que** l'ensemble de séparation et / ou de nettoyage (18, 18a) présente au moins un nettoyeur à rouleaux longitudinaux (27) et / ou un nettoyeur à rouleaux en étoile (41), et **en ce qu'**un plan de transport formé pour le courant de produit récolté sur ce nettoyeur à rouleaux longitudinaux (27) et / ou nettoyeur à rouleaux en étoile (41) peut être réglé dans au moins une zone partielle au niveau de son inclinaison par un actionneur (31) commandé par une électronique de commande (33) avec au moins un capteur d'inclinaison (34) de telle manière qu'une inclinaison réglée et /ou choisie du plan de transport soit maintenue indépendamment de l'inclinaison de la machine.

3. Récolteuse selon la revendication 1 ou 2, **caractérisée en ce que** le dispositif de transport (26) peut être commandé de telle manière qu'il guide, dans un premier état de l'ensemble de séparation et / ou de nettoyage (18, 18a), le courant de produit récolté d'une première zone de séparation et / ou de nettoyage (19, 22) vers une deuxième zone de séparation et / ou de nettoyage (27, 41) et guide, dans un deuxième état de l'ensemble de séparation et / ou de nettoyage (18, 18a), le courant de produit récolté directement de la première zone de séparation et / ou de nettoyage (19, 22) vers une troisième zone de séparation et / ou de nettoyage (36) faisant suite à la deuxième zone de séparation et / ou de nettoyage (27, 41) dans le sens de transport du courant de produit récolté.

4. Récolteuse selon l'une des revendications précédentes, **caractérisée en ce que** le courant de produit récolté est mu à l'intérieur de l'ensemble de séparation et / ou de nettoyage (18, 18a) au moins dans le premier état de fonctionnement de cet ensemble sur un tronçon de transport qui présente au moins une double déviation ou présente un tracé en forme de S ou en forme de Z, dans laquelle par exemple une première zone de séparation et / ou de nettoyage (19, 22) est prévue au-dessus d'une deuxième zone de séparation et / ou de nettoyage (27, 41) lui faisant suite dans le sens de transport du courant de produit récolté et / ou dans laquelle par exemple le courant de produit récolté subit ladite au moins double déviation ou encore suit un trajet en forme de S ou en forme de Z sur une partie du tronçon de transport formé par la première zone de séparation et / ou de nettoyage (19, 22), par le dispositif de transport (26) et par la deuxième zone de séparation et / ou de nettoyage (27, 41).

5. Récolteuse selon l'une des revendications précédentes, **caractérisée en ce que** le dispositif de transport est formé par au moins une bande transporteuse (26) et **en ce que** pour le changement de l'état de fonctionnement de l'ensemble de séparation et / ou de nettoyage (18, 18a), le sens de transport (D, D') et / ou la position de la bande transporteuse (26) peuvent être changés.

6. Récolteuse selon l'une des revendications précédentes, **caractérisée en ce qu'**au moins une zone de séparation et / ou de nettoyage présente au moins un rouleau séparateur de fanes (21, 39) ou un groupe de rouleaux séparateurs de fanes (19, 36), dans laquelle par exemple la première et / ou la troisième zone de séparation et / ou de nettoyage présente au moins un rouleau séparateur de fanes (21, 39) ou un groupe de rouleaux séparateurs de fanes (19, 36).

7. Récolteuse selon l'une des revendications précédentes, **caractérisée en ce que** la première zone de séparation et / ou de nettoyage présente au moins un groupe de rouleaux en étoile (22) avec rouleau de préparation (25).

8. Récolteuse selon l'une des revendications précédentes, **caractérisée en ce qu'**au moins une zone de séparation et / ou de nettoyage est formée par au moins un nettoyeur à rouleaux longitudinaux (27) et / ou par un nettoyeur à rouleaux en étoile (41), dans laquelle par exemple la deuxième zone de séparation et / ou de nettoyage est formée par ledit au moins un nettoyeur à rouleaux longitudinaux (27) et / ou le nettoyeur à rouleaux en étoile (41), et / ou dans laquelle par exemple le nettoyeur à rouleaux longitudinaux (27) est formé par une pluralité de rouleaux (28) voisins les uns des autres et **en ce que** ceux-ci forment pour le courant de produit récolté un plan de transport commun qui est réalisé de préférence de manière concave en direction du côté supérieur au moins dans la zone du bord.

9. Récolteuse selon l'une des revendications précédentes, **caractérisée en ce que** la deuxième zone de séparation et / ou de nettoyage, qui est formée par au moins un nettoyeur à rouleaux longitudinaux (27) et / ou nettoyeur à rouleaux en étoile (41), est prévue à la suite de la première zone de séparation et / ou de nettoyage (19, 22) et avant la troisième zone de séparation et / ou de nettoyage (36, 39) dans le sens de transport (A, A') du courant de produit récolté.

10. Récolteuse selon l'une des revendications précédentes, **caractérisée en ce que** ledit au moins un tronçon de transport (14) présente à la suite de l'ensemble de séparation et / ou de nettoyage (18, 18a) dans le sens de transport (A, A4) du courant de produit récolté au moins une bande hérisson (Igelband) (16), dans laquelle par exemple le tronçon de transport présente à la suite de la bande hérisson (16) un élévateur (13) pour amener le produit récolté dans la trémie (12).
